# EUROPEAN PATENT APPLICATION

(11) **EP 2 866 016 A1**
(43) Date of publication of application: **29.04.2015**
(21) Application number: 14003578.3
(22) Date of filing: 20.10.2014
(51) Int. Cl.: G01N 1/22, G01N 1/38

(54) **Exhaust gas sampling device and exhaust gas analyzing system**

(30) Priority: 22.10.2013 JP 2013218793
(71) Applicant: Public Interest Incorporated Foundation Japan Automobile Transport Technology Association, Tokyo 160-0004 (JP); HORIBA, LTD., Kyoto-shi, Kyoto 601-8510 (JP)
(72) Inventor: Yokoyama, Hideya, Shinjuku-ku, Tokyo 160-0004 (JP); Hara, Ippei, Shinjuku-ku, Tokyo 160-0004 (JP); Noda, Akira, Shinjuku-ku, Tokyo 160-0004 (JP); Koike, Hitoshi, Shinjuku-ku, Tokyo 160-0004 (JP); Yoshimura, Sayaka, Kyoto-shi, Kyoto 601-8510 (JP); Masuda, Shintaro, Kyoto-shi, Kyoto 601-8510 (JP); Kumagai, Tatsuki, Kyoto-shi, Kyoto 601-8510 (JP); Otsuki, Yoshinori, Kyoto-shi, Kyoto 601-8510 (JP)
(74) Representative: Müller Hoffmann & Partner

(57) **Abstract**

This invention is an exhaust gas sampling device that samples an exhaust gas by the use of an open-type exhaust gas sampling part and that is for reducing leakage of the exhaust gas produced due to unevenness of flow velocity of a cooling wind around an exhaust gas pipe. The exhaust gas sampling device comprises the exhaust gas sampling part that has an exhaust gas sampling port arranged to face an exhaust gas discharging port of the exhaust gas pipe and that samples the exhaust gas emitted from the exhaust gas discharging port and an ambient gas surrounding the exhaust gas pipe, and the exhaust gas sampling part has an involvement decreasing structure that decreases the exhaust gas flowing out from the exhaust gas sampling port due to involvement of the exhaust gas by the ambient gas that flows in from the exhaust gas sampling port.

## Description

### FIELD OF THE ART

This invention relates to an exhaust gas sampling device that samples a gas flowing from an exhaust gas pipe where the exhaust gas emitted from an internal combustion engine flows and an exhaust gas analyzing system that uses the exhaust gas sampling device.

### BACKGROUND ART

As a device that measures a concentration of a predetermined measurement component contained in the exhaust gas of the internal combustion engine, there is an exhaust gas analyzing device that has, for example, an open-type exhaust gas sampling part (hereinafter called as an open-type sampling part) as shown in the patent document 1.

This exhaust gas analyzing device comprises an open-type sampling part that sucks the exhaust gas emitted from an exhaust gas pipe of a vehicle and that sucks an ambient gas around the exhaust gas pipe, a flow channel where a mixed gas made of the exhaust gas and the ambient gas sucked by the open-type sampling part flows, and a measurement part that is arranged on the flow channel and that measures a concentration of a predetermined measurement component contained in the mixed gas.

However, since the exhaust gas analyzing device having the open-type sampling part has a space to suck the ambient gas between the open-type sampling part and the exhaust gas pipe, the exhaust gas might leak outside through this space so that it might fail to analyze the exhaust gas accurately.

In consideration of this problem, it is conceived that the exhaust gas pipe is inserted into the open-type sampling part in order to prevent the leakage of the exhaust gas. However, if the exhaust gas pipe is inserted into the open-type sampling part too much, a test condition might change due to an unnecessary burden applied to the internal combustion engine. As a result of this, it becomes difficult to analyze the exhaust gas accurately. In addition, there are a lot of open-type sampling parts into which an end of the exhaust gas pipe cannot be inserted due to a structure of the exhaust gas system of the vehicle. Meanwhile, if the open-type sampling part and the exhaust gas pipe are separated too much, the exhaust gas might leak from the space between the open-type sampling part and the exhaust gas pipe. As a result of this, this arrangement cannot be a solution to this problem.

### PRIOR ART DOCUMENTS

### Patent Document

Patent document 1: Japanese Unexamined Patent Application Publication No. 2000 - 314684

### DISCLOSURE OF THE INVENTION

### PROBLEMS TO BE SOLVED BY THE INVENTION

Under the above-mentioned situation, the present claimed inventor has conducted various examinations in order to reduce leakage of the exhaust gas by changing a positional relationship between the open-type sampling part and the exhaust gas pipe. This examination reveals that cooling wind from the engine cooling fan arranged in the front of a vehicle causes the leakage of the exhaust gas in the open-type sampling part. The engine cooling fan cools down an engine of the vehicle that test-runs on a chassis dynamo similar to a condition of running on a road.

Namely, since the exhaust gas pipe is arranged at a position displaced from the vehicle, a part where the flow velocity of the cooling wind is fast and a part where the flow velocity of the cooling wind is slow are generated around the exhaust gas pipe so that the flow velocity of the cooling wind that flows in the open-type sampling part becomes uneven. As a result of this, the cooling wind whose flow velocity is fast and that flows in the open-type sampling part involves the exhaust gas in the open-type sampling part and the exhaust gas flows out from a part where the cooling wind whose flow velocity is slow flows in, resulting in leakage of the exhaust gas. This problem is caused not only by the arrangement wherein the exhaust gas pipe is provided at the position displaced from the vehicle but also by a layout of each test device in a test room, a shape of the vehicle or a relative positional relationship between the engine cooling fan and the vehicle.

The present claimed invention intends to solve all of the problems and a main object of this invention is to provide an exhaust gas sampling device having an open-type exhaust gas sampling part that reduces leakage of the exhaust gas generated by the unevenness of the flow velocity of the ambient gas such as the cooling wind around the exhaust gas pipe.

### MEANS TO SOLVE THE PROBLEMS

More specifically, an exhaust gas sampling device in accordance with this invention is an exhaust gas sampling device that samples an exhaust gas from an exhaust gas pipe where the exhaust gas emitted from an internal combustion engine flows, comprising an exhaust gas sampling part that has an exhaust gas sampling port arranged to face an exhaust gas discharging port of the exhaust gas pipe and that samples the exhaust gas emitted from the exhaust gas discharging port and an ambient gas surrounding the exhaust gas pipe, wherein the exhaust gas sampling part has an involvement decreasing structure that decreases the exhaust gas flowing out from the exhaust gas sampling port due to involvement of the exhaust gas by the ambient gas that flows in from the exhaust gas sampling port.

In addition, the exhaust gas analyzing system in accordance with this invention is an exhaust gas analyzing system that comprises an exhaust gas sampling device that samples an exhaust gas from an exhaust gas pipe where the exhaust gas emitted from an internal combustion engine flows and an exhaust gas analyzing device that analyses the exhaust gas sampled by the exhaust gas sampling device, and the system further comprises an exhaust gas sampling part that has an exhaust gas sampling port arranged to face an exhaust gas discharging port of the exhaust gas pipe and that samples the exhaust gas emitted from the exhaust gas discharging port and an ambient gas surrounding the exhaust gas pipe, wherein the exhaust gas sampling part has an involvement decreasing structure that decreases the exhaust gas flowing out from the exhaust gas sampling port due to involvement of the exhaust gas by the ambient gas that flows in from the exhaust gas sampling port.

In accordance with this arrangement, since the exhaust gas sampling part has the involvement decreasing structure that decreases the exhaust gas flowing out from the exhaust gas sampling port due to involvement of the exhaust gas by the ambient gas that flows in from the exhaust gas sampling port, it is possible to reduce the leakage of the exhaust gas from the exhaust gas sampling port to the outside. In other words, even though a case that the flow velocity of the ambient gas around the exhaust gas pipe is uneven due to a position of the exhaust gas pipe relative to the vehicle or a layout of each test device in a test room, it is possible to reduce the involvement of the exhaust gas resulting from the unevenness of the flow velocity of the ambient gas so that the leakage of the exhaust gas from the exhaust gas sampling port can be reduced. As a result of this, it is possible to analyze the exhaust gas accurately by the use of the open-type exhaust gas sampling part.

As a concrete arrangement of the involvement decreasing structure conceived is that the involvement decreasing structure comprises an ambient gas passing part that is formed in a downstream side of the exhaust gas sampling port and where the ambient gas passes from an inside of the exhaust gas sampling part to an outside thereof or from the outside to the inside.

In accordance with this arrangement, even though a case that the flow velocity of the ambient gas flowing from the exhaust gas sampling port is uneven, the ambient gas whose flow velocity is fast is discharged to the outside of the exhaust gas sampling port through the ambient gas passing part. As a result of this, it is possible to prevent the exhaust gas from flowing outside through the exhaust gas sampling port due to the involvement of the exhaust gas by the ambient gas whose flow velocity is fast so that the leakage of the exhaust gas can be reduced.

As a concrete arrangement of the ambient gas passing part conceived is that the ambient gas passing part comprises a through bore or a slit that is formed on a side wall of the exhaust gas sampling part and that communicates the inside of the exhaust gas sampling part with the outside thereof.

In accordance with this arrangement, since the through bore or the slit formed on the side wall of the exhaust gas sampling part will do, the arrangement of the exhaust gas sampling part can be simplified.

As another concrete arrangement of the involvement decreasing structure, it is preferable that the involvement decreasing structure comprises a rectifying member arranged on the exhaust gas sampling port.

In accordance with this arrangement, if the rectifying member is provided on the exhaust gas sampling port, the flow velocity of the ambient gas flowing from the exhaust gas sampling port can be made uniform. With this arrangement, it is possible to prevent the ambient gas whose flow velocity is fast from involving the exhaust gas and to prevent the exhaust gas from flowing out from the exhaust gas sampling port. As a result of this, it is possible to reduce the leakage of the exhaust gas. In addition, the ambient gas and the exhaust gas that pass the rectifying member is difficult to flow out from the exhaust gas sampling port due to the rectifying member so that it is possible to reduce the leakage of the exhaust gas.

It is preferable that the exhaust gas sampling part has the exhaust gas sampling port that is larger than the exhaust gas discharging port, and the rectifying member is arranged on a whole part of the exhaust gas sampling port.

With this arrangement, it is possible to further reduce the leakage of the exhaust gas compared with a case of providing the rectifying member on only a part of the exhaust gas sampling port.

### EFFECT OF THE INVENTION

In accordance with this invention having the above-mentioned arrangement, it is possible for the exhaust gas sampling device that samples the exhaust gas by the use of the open-type exhaust gas sampling port to reduce the leakage of the exhaust gas due to unevenness of the flow velocity of the ambient gas surrounding the exhaust gas pipe so that it becomes possible to analyze the exhaust gas accurately.

### BRIEF DESCRIPTION OF THE DRAWINGS

Fig. 1 is a schematic view showing an exhaust gas analyzing system of this embodiment.
Fig. 2 is a plane view and a front view showing a structure of an exhaust gas sampling part of this embodiment.
Fig. 3 is a cross-sectional view of the exhaust gas sampling part of this embodiment taken along a line A - A'.
Fig. 4 is a plane view schematically showing a positional relationship between a cooling fan, a vehicle and the exhaust gas sampling part of this embodiment.
Fig. 5 is a cross-sectional view schematically showing a flow of an ambient gas in the exhaust gas sampling part.
Fig. 6 is a plane view showing a structure of an exhaust gas sampling part of a modified embodiment, a cross-sectional view taken along a line B - B' and a cross-sectional view taken along a line C - C'.
Fig. 7 is a plane view showing a structure of the exhaust gas sampling part of the modified embodiment and a cross-sectional view taken along a line D - D'.
Fig. 8 is a plane view and a front view showing a structure of the exhaust gas sampling part of the modified embodiment and a cross-sectional view taken along a line E-E'.

### BEST MODES OF EMBODYING THE INVENTION

An exhaust gas analyzing system using an exhaust gas sampling device in accordance with this invention will be explained with reference to drawings.

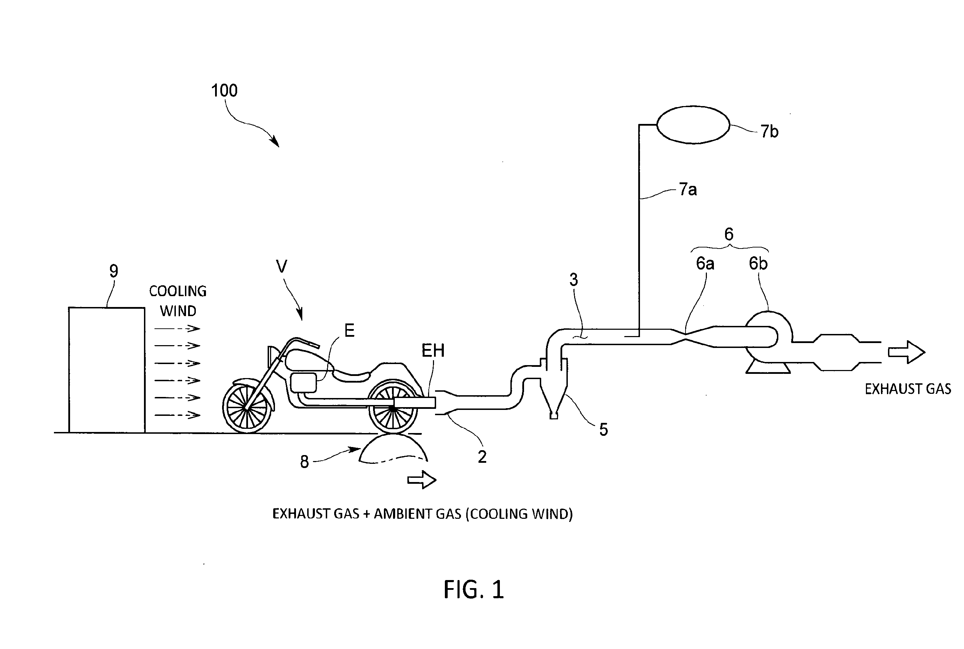

The exhaust gas analyzing system 100 of this embodiment is, as shown in Fig. 1, a quantitative dilution analyzing device (an open-type CVS) comprising an open-type exhaust gas sampling device. The exhaust gas analyzing system 100 samples an exhaust gas emitted from an exhaust gas pipe (EH) of an internal combustion engine (engine) (E) of a test vehicle (V) such as, for example, a four-wheeled vehicle and a two-wheeled vehicle, dilutes the sampled exhaust gas with a dilution gas such as an atmosphere and detects a concentration of a predetermined composition of the diluted exhaust gas. The exhaust gas analyzing system 100 of this embodiment is an analyzing system that conducts a test running of the test vehicle (V) such as the four-wheeled vehicle and the two-wheeled vehicle on a chassis dynamo 8, and an engine cooling fan 9 that produces an cooling air to cool the engine (E) of the test vehicle (V) is provided similar to the case of running on a road.

The exhaust gas analyzing system 100 of this embodiment comprises an open-type exhaust gas sampling part 2 that samples the exhaust gas emitted from the exhaust gas pipe (EH) and an ambient gas surrounding the exhaust gas pipe (EH) and a main flow channel 3 where the exhaust gas sampled by the exhaust gas sampling part 2 and the ambient gas flow.

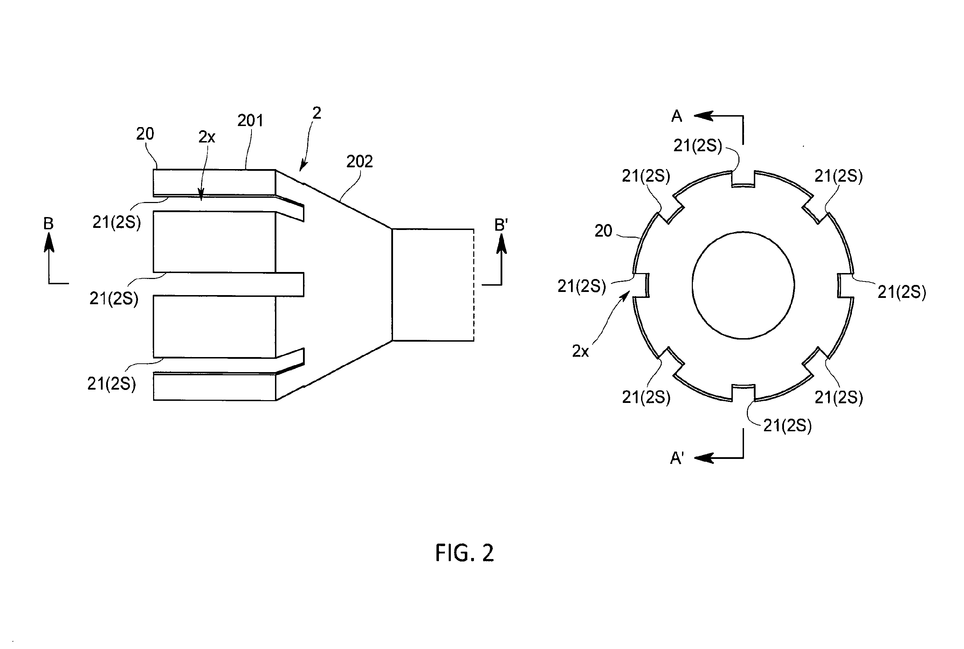

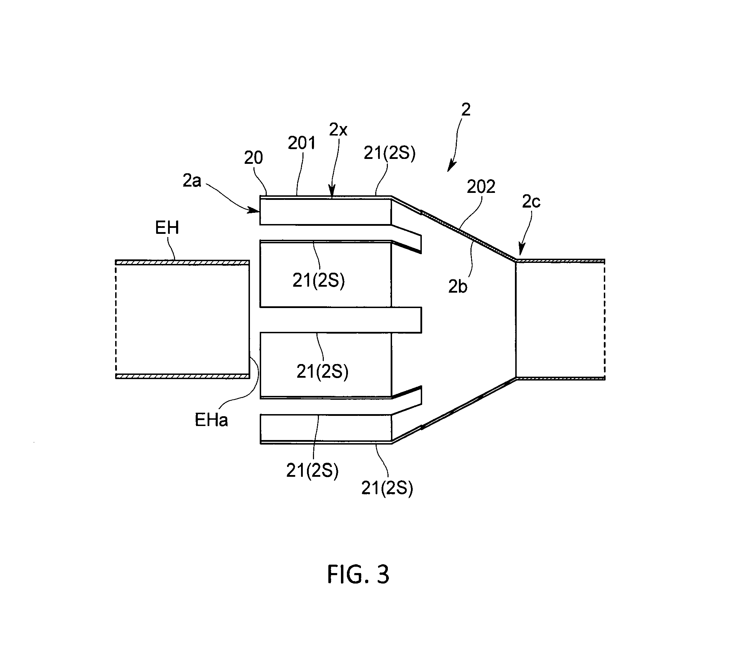

The exhaust gas sampling part 2 is, as shown in Fig. 2 and Fig. 3, arranged separately from the exhaust gas pipe (EH) to face an exhaust gas discharging port (EHa). The exhaust gas sampling part 2 has an exhaust gas sampling port 2a that is larger than the exhaust gas discharging port (EHa) and samples the exhaust gas emitted from the exhaust gas discharging port (EHa) and the ambient gas surrounding the exhaust gas discharging port (EHa). "Separately" here means that the exhaust gas sampling part 2 is arranged through a space at least either one of directions such as a circumferential direction (right and left directions) and front and back directions of the exhaust gas pipe (EH) from the exhaust gas pipe (EH). In Fig. 2, the space is provided between the exhaust gas sampling part 2 and the exhaust gas pipe (EH) in the front and back directions and the circumferential direction, however, the exhaust gas pipe (EH) may be inserted into inside of the exhaust gas sampling part 2. The ambient gas of this embodiment is a cooling wind comprising the atmosphere produced by means of the engine cooling fan 9 and the atmosphere existing in the surrounding area.

The exhaust gas sampling part 2 is in a shape of a hollow circular tube, and an exhaust gas sampling port 2a whose open shape is circle is formed on an opening part 20 locating in the upstream side. The exhaust gas sampling port 2a is arranged to be generally a concentric circle to the exhaust gas discharging port (EHa) of the exhaust gas pipe (EH). In addition, a pipe constituting the main flow channel 3 is connected to the opening part locating in the downstream side of the exhaust gas sampling part 2.

In addition, as shown in Fig. 3, a tapered surface 2b whose opening of a cross-section gradually decreases in a direction from the exhaust gas sampling port 2a to a connecting part 2c to be connected to the main flow channel 3 is provided on an inner peripheral surface of the exhaust gas sampling part 2. Concretely, the exhaust gas sampling part 2 of this embodiment comprises an upper stream side tubular part 201 of a generally cylindrical shape that has the same internal diameter as that of the exhaust gas sapling port 2a and a downstream side tubular part 202 that is arranged continuous to the upper stream side tubular part 201 and whose shape is a generally truncated cone having the tapered surface 2b.

As shown in Fig. 1, a mixing part 5 that stirs and mixes the exhaust gas, the ambient gas and the dilution gas and a constant flow rate mechanism 6 that fixes a flow rate of a fluid that flows in the main flow channel 3 are arranged on the main flow channel 3 from the upstream side in this order.

In addition, a dilution gas introducing flow channel that is connected to the main flow channel 3 and that flows, for example, the atmosphere as being the dilution gas in the main flow channel 3 may be provided in the upstream side of the mixing part 5. A flow rate adjusting valve that can change a flow rate of the dilution gas arbitrarily by, for example, a user may be provided for the dilution gas introducing flow channel.

The mixing part 5 comprises a cyclone provided in the downstream side of a junction of the main flow channel 3 and the dilution gas introducing flow channel 4, and the cyclone stirs and mixed the exhaust gas and the atmosphere together with removing dust and produces the mixed gas made of the exhaust gas diluted by the atmosphere. The atmosphere that is stirred and mixed with the exhaust gas by the mixing part 5 is an atmosphere as being the ambient gas sampled by the exhaust gas sampling part 2 and the dilution gas introduced from the dilution gas introducing flow channel. The mixing part 5 is not limited to the cyclone and may be of various members such as an impeller.

The constant flow rate mechanism 6 controls the flow rate so as to make a total flow rate of the mixed gas constant, and comprises a venturi 6a made of a critical flow rate venturi (CFV) and a suction pump 6b such as, for example, a blower that is connected to the downstream side of the venturi 6a.

Then, the total flow rate of the mixed gas flowing in the main flow channel 3 is made constant by making a differential pressure between the pressure in the upstream side of the venturi 6a and the pressure in the downstream side thereof more than or equal to a predetermined amount by sucking the mixed gas by means of the sucking pump 6b. The mixed gas sucked by the suction pump 6b is discharged into outside.

In this embodiment, a sampling line 7a that samples a part of the mixed gas flowing in the main flow channel 3 is connected to the main flow channel 3 between the mixing part 5 and the constant flow rate mechanism 6. An analytical instrument 7b for analyzing the mixed gas sampled from the sampling line 7a is connected to the sampling line 7a. The analytical instrument 7b is, for example, a sampling bag that stores the sampled mixed gas. A concentration of a predetermined component contained in the mixed gas stored in this sampling bag is analyzed by an analyzer, for example, an NDIR. It is possible to apply an existing art appropriately by connecting an exhaust gas continuous analyzer instead of the sampling bag.

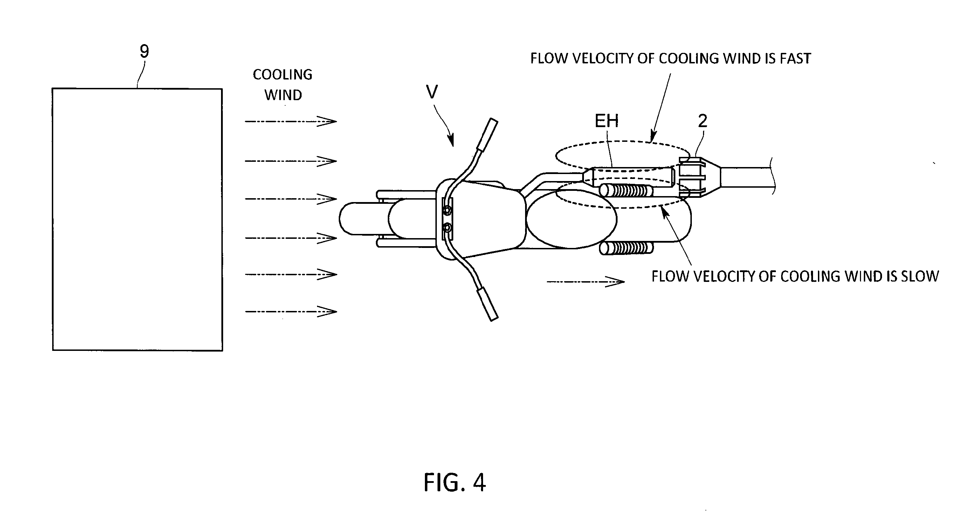

As shown in Fig. 2 and Fig. 3, the exhaust gas sampling part 2 of this embodiment has an involvement decreasing structure 2x that decreases the exhaust gas flowing out from the exhaust gas sampling port 2a due to involvement of the exhaust gas by the ambient gas that flows in from the exhaust gas sampling port 2a. As shown in Fig. 4, since the vehicle (V) such as, for example, a two-wheeled vehicle has such an arrangement that the exhaust gas pipe (EH) is arranged at a position displaced from the vehicle (V), a flow velocity of a cooling wind from the engine cooling fan 9 around the exhaust gas pipe (EH) is uneven. As a result of this, the flow velocity of the ambient gas (the cooling wind) sampled by the exhaust gas sampling part 2 at the exhaust gas sampling port 2a becomes uneven.

Concretely, the involvement decreasing structure 2x comprises an ambient gas passing part 21 formed in the downstream side of the exhaust gas sampling port 2a. The ambient gas passing part 21 is formed on a side wall of the exhaust gas sampling part 2 so as to communicate the inside and the outside of the exhaust gas sampling part 2, and to pass the ambient gas. The involvement decreasing structure 2x of this embodiment is made of multiple (eight pieces in Fig. 2) slits 2S.

The slits 2S are formed from an opening end of an opening part 20 forming the exhaust gas sampling port 2a along an axial direction of the exhaust gas sampling part 2. More specifically, the slits 2S are formed from the opening end of the exhaust gas sampling part 2 (upstream side tubular part 201) to a midway of the downstream side tubular part 202. In other words, the slits 2S in this embodiment are formed on a part of the tapered surface 2b. In addition, multiple slits 2S are formed along a circumferential direction on the side wall of the exhaust gas sampling part 2 at even intervals, and a shape of each slit 2S is identical each other.

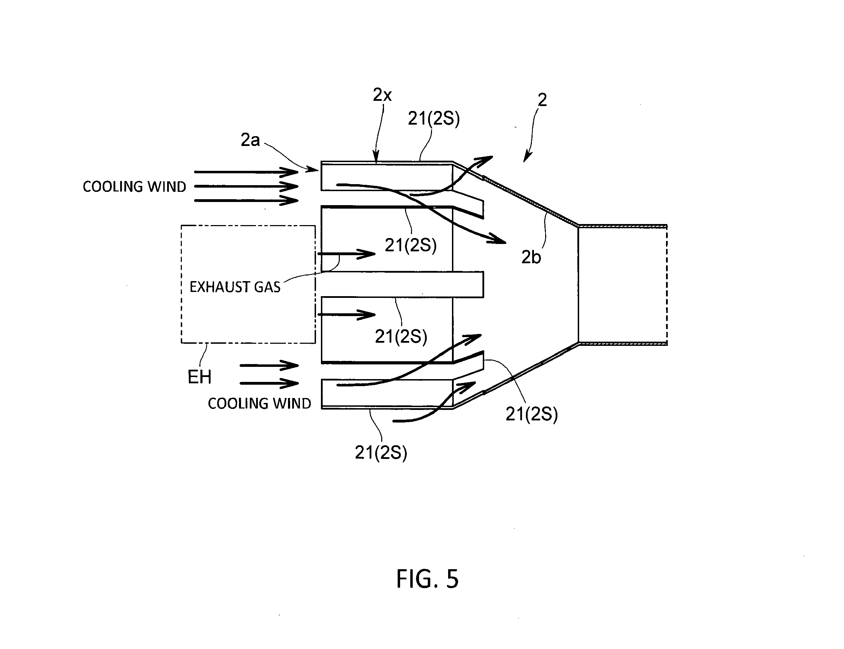

For the exhaust gas sampling part 2 having the above-mentioned arrangement, as shown in Fig. 5, in case that the flow velocity of the cooling wind flowing around the exhaust gas pipe (EH) is uneven (the flow velocity in the upside is fast and the flow velocity in the downside is slow in Fig. 5), the cooling wind whose flow velocity is fast flows in an upside part of the exhaust gas sampling port 2a. At this time, since a part of the cooling wind whose flow velocity is fast is discharged from the ambient gas passing part 21 (the slits 2S) formed on the side wall of the exhaust gas sampling part 2 to the outside so that the cooling wind is prevented from flowing in the downside part of the exhaust gas sampling part 2, it is possible to reduce involvement of the exhaust gas. In addition, the cooling wind flows in inside of the ambient gas passing part 21 (the slits 2S) formed in a part where the cooling wind whose flow velocity is slow flows in from the outside, or a part of the cooling wind whose flow velocity is slow is discharged to the outside of the exhaust gas sampling part 2. Whether the cooling wind is discharged from each of the ambient gas passing parts 21 (the slits 2S) to the outside or the cooling wind flows in inside of the exhaust gas sampling part from each of the ambient gas passing parts 21 (the slits 2S) is determined based on a control flow rate of the constant flow rate mechanism 6, the exhaust gas flow rate from the exhaust gas pipe (EH) and the flow rate (the flow velocity) of the cooling wind.

In accordance with the exhaust gas analyzing system 100 in accordance with this embodiment having the above-mentioned arrangement, since the exhaust gas sapling part 2 has the involvement decreasing structure 2x that decreases the exhaust gas flowing out from the exhaust gas sampling port 2a due to involvement of the exhaust gas by the cooling wind that flows in from the exhaust gas sampling port 2a, it is possible to reduce the leakage of the exhaust gas from the exhaust gas sampling port 2a. In other words, in case that the flow velocity of the cooling wind around the exhaust gas pipe (EH) becomes uneven due to a position of the exhaust gas pipe (EH) relative to the vehicle (V) or a layout of each test device in the test room, the involvement decreasing structure 2x reduces involvement of the exhaust gas caused by unevenness of the flow velocity of the cooling wind and reduces the leakage of the exhaust gas from the exhaust gas sampling port 2a. As a result of this, it is possible to analyze the exhaust gas accurately by the use of the open-type exhaust gas sampling part 2.

In addition, since the involvement decreasing structure 2x comprises the slits 2S that make the inside and the outside of the exhaust gas sampling part 2 communicate each other, it is possible to simplify the arrangement of the exhaust gas sampling part 2.

Furthermore, since the slits 2S are formed to reach the tapered surface 2b (the downstream side tubular part 202), it is possible to make it easy to discharge the extra cooling wind from the exhaust gas sampling part 2 to the outside.

The present claimed invention is not limited to the above-mentioned embodiment.

For example, the ambient gas passing part 21 is formed by forming the slits 2S on the side wall of the exhaust gas sampling part 2 in the above-mentioned embodiment, however, the ambient gas passing part 21 may be formed by forming a through bore on the side wall of the exhaust gas sampling part 2.

In the above-mentioned embodiment, the slits or the through bore are formed in the direction of the flow channel (the axial direction of the pipe), however, they may be formed in a direction different from the direction of the flow channel or may be formed in a circumferential direction of the pipe.

In the above-mentioned embodiment, each of the multiple slits 2S has the same shape, however, the shape may be different each other. For example, in case that a part where the flow velocity of the cooling wind is fast and a part where the flow velocity of the cooling wind is slow are previously known due to a positional relationship between the vehicle and the exhaust gas pipe, it can be conceived that the slits 2S or the through bore formed at the part where the cooling wind is fast is made to be larger than the slits 2S or the through bore formed at the part where the cooling wind is slow (for example, a width of the slit or the through bore is made wide, or a length of the slit or the through bore is made long).

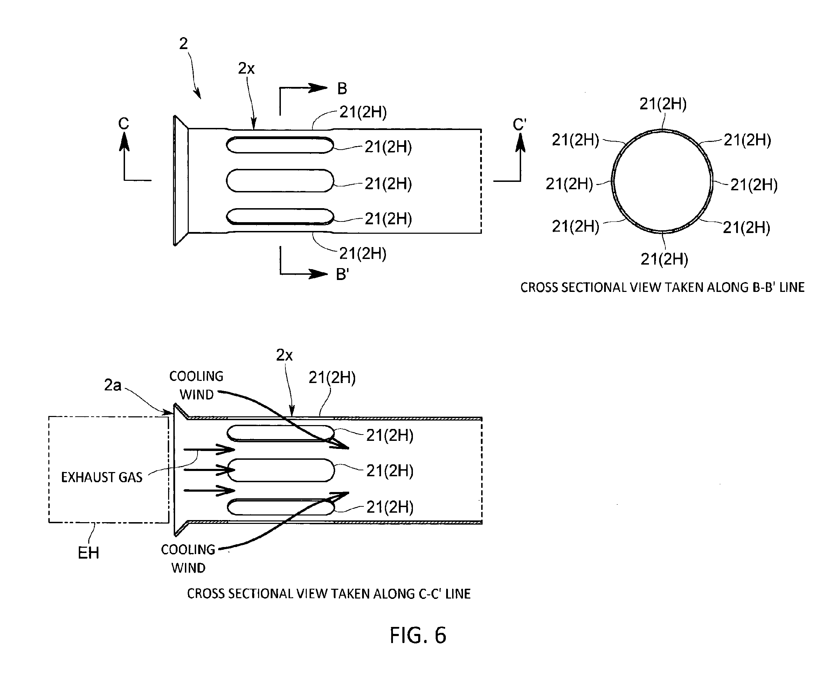

In addition, the shape of the exhaust gas sampling part 2 is not limited to the above-mentioned embodiment, and it may be, as shown in Fig. 6, a general cylinder. In this case, it can be conceived that the exhaust gas sampling part 2 has the exhaust gas sampling port 2a that is generally the same or a little larger than the exhaust gas discharging port (EHa) of the exhaust gas pipe (EH) and a through bore 2H is provided as the ambient gas passing part 21 in the downstream side of the exhaust gas sampling port 2a. With this arrangement, it is possible both to make it difficult for the ambient gas to flow in from the exhaust gas sampling port 2a and to introduce the ambient gas from the through bore 2H as being the ambient gas passing part 21 formed in the downstream side into the exhaust gas sampling part 2. With this arrangement, it is possible to decrease the exhaust gas flowing out from the exhaust gas sampling port 2a due to involvement of the exhaust gas by the ambient gas that flows in from the exhaust gas sampling port 2a so that the exhaust gas can be analyzed accurately.

The exhaust gas sampling port 2a of the exhaust gas sampling part 2 shown in Fig. 6 has generally the same size as that of the exhaust gas discharging port (EHa) of the exhaust gas pipe (EH), however, the exhaust gas sampling port 2a may be formed larger than the exhaust gas discharging port (EHa). In this case, although the ambient gas flows in from the exhaust gas sampling port 2a, the unnecessary ambient gas is not introduced into the downstream of the exhaust gas sampling port 2a due to a diaphragm shape so that the ambient gas does not contact the exhaust gas. As a result of this, the leakage of the exhaust gas is reduced by preventing the exhaust gas being involved by the ambient gas. In addition, if the size of the exhaust gas sampling port 2a is made to be generally the same as that of the exhaust gas pipe (EH), it is possible to reduce inflow of the ambient gas from the exhaust gas sampling port 2a so that the ambient gas can be introduced through the through bore 2H (the ambient gas passing part 21) in a state wherein an influence of the cooling wind is reduced. In addition, a part of the cooling wind (the ambient gas) whose flow velocity is fast is discharged from the through bore 2H (the ambient gas passing part 21) formed in the downstream side of the exhaust gas sampling port 2a to the outside of the exhaust gas sampling part 2.

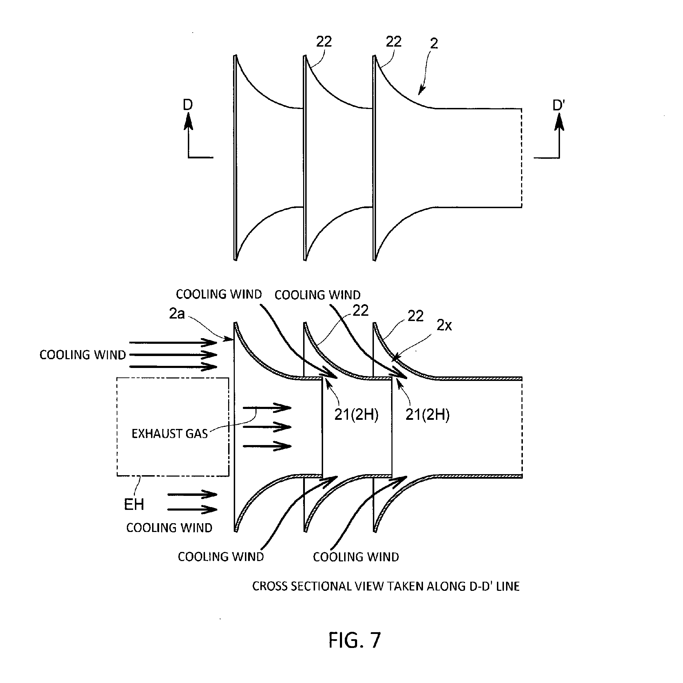

Furthermore, as shown in Fig. 7, a plurality of through bores 2H (the ambient gas passing part 21) may be formed along the axial direction. In addition, Fig. 7 shows an example that the through bores 2H (the ambient gas passing part 21) are formed along whole of the circumferential direction, and furthermore, in Fig. 7, an inviting part 22 of a curbed flange shape is formed for each of the ambient gas passing parts 21 to make it easy to flow the ambient gas surrounding the exhaust gas sampling part 2 into the through bores 2H.

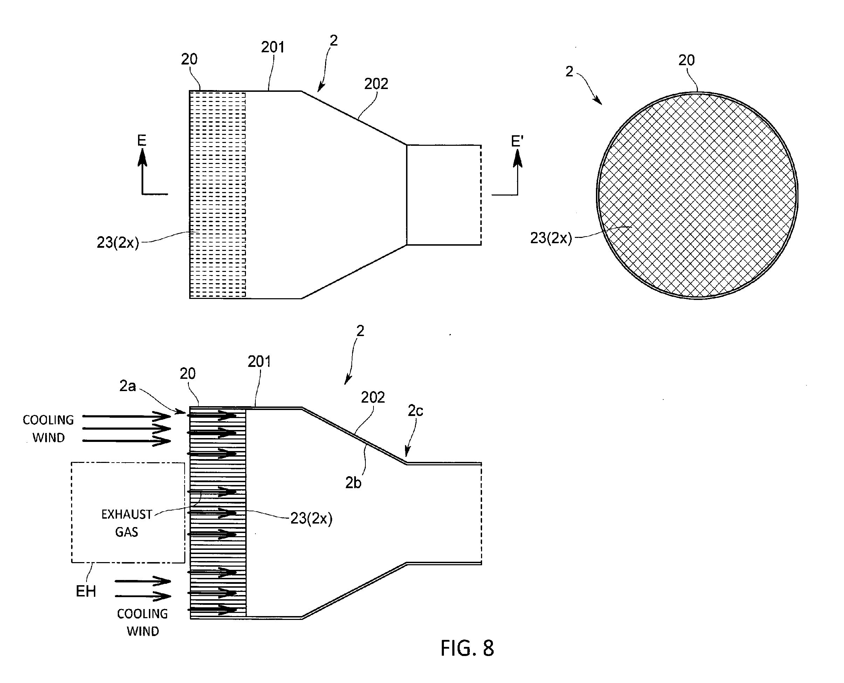

In addition, as shown in Fig. 8, the involvement decreasing structure 2x may comprise a rectifying member 23 arranged on the exhaust gas sampling port 2a. Concretely, the exhaust gas sampling part 2 has the exhaust gas sampling port 2a that is larger than the exhaust gas discharging port (EHa) and the rectifying member 23 is provided for whole of the exhaust gas sampling port 2a. In addition, the rectifying member 23 is a member where a plurality of capillaries are spread all over a surface with each flow channel direction aligned, and rectifying member 23 is formed from the exhaust gas sampling port 2a to a predetermined position on the exhaust gas sampling part 2. The rectifying member 23 serves as a fluid resistance for the gas flowing in from the exhaust gas sampling port 2a. Since the cooling wind whose fluid velocity is fast receives a resistance bigger than that of the cooling wind whose fluid velocity is slow, the cooling wind is sampled in the exhaust gas sampling part 2 in a state that the fluid velocity of the cooling wind is uniformed. As mentioned, since the rectifying member 23 is provided for the exhaust gas sampling port 2a, the rectifying member 23 serves as the fluid resistance so that it is possible to make the fluid velocity of the cooling wind flowing in from the exhaust gas sampling port 2a generally even. As a result of this, it is possible to prevent the cooling wind whose fluid velocity is fast from involving the exhaust gas and flowing out from the exhaust gas sampling port 2a, resulting in reducing the leakage of the exhaust gas. In order to position the exhaust gas discharging port (EHa) of the exhaust gas pipe (EH) inside of the exhaust gas sampling port 2a of the exhaust gas sampling part 2, a part of a distal end surface of the rectifying member 23 may be dented.

In addition, a shape of the opening of the exhaust gas sampling port is not limited to a circle, and may be, for example, a polygon such as a rectangle and a triangle or an ellipse.

The exhaust gas analyzing system of the above-mentioned embodiment may have such an arrangement that a part of the diluted exhaust gas is sampled from the main flow channel, the diluted exhaust gas is diluted again (two-step dilution) and then the two-step diluted exhaust gas is analyzed.

In addition, the exhaust gas sampling device of the above-mentioned embodiment samples the exhaust gas discharged from the exhaust gas pipe of the engine of the two-wheeled vehicle or four-wheeled vehicle driven by the chassis dynamometer, however, the exhaust gas sampling device may sample the exhaust gas discharged from the exhaust gas pipe of the engine driven by an engine dynamometer.

The dilution gas introducing flow channel is provided in the above-mentioned embodiment, however, the dilution gas introducing flow channel may not be provided. In this case, the atmosphere mixed with the exhaust gas in the mixing part is the atmosphere alone sampled by the exhaust gas sampling part.

In addition to the arrangement of the above-mentioned embodiment, an exhaust gas detecting mechanism for detecting a predetermined component (for example, CO, CO₂, NOx or the like) contained in the exhaust gas may be provided in order to detect leakage of the exhaust gas in the exhaust gas sampling part. The exhaust gas detecting mechanism comprises a sampling part for detection to sample the gas near the exhaust gas sampling port of the exhaust gas sampling part and a leakage detecting part that detects a concentration of the predetermined component contained in the exhaust gas sampled by the sampling part for detection.

The constant flow rate mechanism is not limited to the structure comprising the critical flow rate venturi and the suction pump, and may use various devices such a critical orifice, a suction blower or a CVS device of a positive displacement pump (PDP) type. In addition, instead of the constant flow rate mechanism, a flexible flow rate control mechanism, namely a flow rate control mechanism that can control the flow rate flowing in the main flow channel flexibly may be used.

In addition, it is a matter of course that the present claimed invention is not limited to the above-mentioned embodiment and may be variously modified without departing from a spirit of the invention.

### EXPLANATION OF CODES

- 100: exhaust gas analyzing system
- E: internal combustion engine
- EH: exhaust gas pipe
- EHa: exhaust gas discharging port
- 2a: exhaust gas sampling port
- 2: exhaust gas sampling part
- 2x: involvement decreasing structure
- 21: ambient gas passing part
- 2S: slit
- 2H: through bore
- 23: rectifying member

## Claims

1. An exhaust gas sampling device that samples an exhaust gas from an exhaust gas pipe through which the exhaust gas emitted from an internal combustion engine flows, comprising an exhaust gas sampling part that has an exhaust gas sampling port arranged to face an exhaust gas discharging port of the exhaust gas pipe and that samples the exhaust gas emitted from the exhaust gas discharging port and an ambient gas surrounding the exhaust gas pipe, wherein
the exhaust gas sampling part has an involvement decreasing structure that decreases the exhaust gas flowing out from the exhaust gas sampling port due to involvement of the exhaust gas by the ambient gas that flows in from the exhaust gas sampling port.

2. The exhaust gas sampling device described in claim 1, wherein
the involvement decreasing structure comprises an ambient gas passing part that is formed in a downstream side of the exhaust gas sampling port and through which the ambient gas passes from an inside of the exhaust gas sampling part to an outside thereof or from the outside to the inside.

3. The exhaust gas sampling device described in claim 2, wherein
the ambient gas passing part comprises a through bore or a slit that is formed on a side wall of the exhaust gas sampling part and that communicates the inside of the exhaust gas sampling part with the outside thereof.

4. The exhaust gas sampling device described in claim 1, wherein
the involvement decreasing structure comprises a rectifying member arranged on the exhaust gas sampling port.

5. The exhaust gas sampling device described in claim 4, wherein
the exhaust gas sampling part has the exhaust gas sampling port that is larger than the exhaust gas discharging port, and
the rectifying member is arranged on a whole part of the exhaust gas sampling port.

6. An exhaust gas analyzing system comprising an exhaust gas sampling device that samples an exhaust gas from an exhaust gas pipe through which the exhaust gas emitted from an internal combustion engine flows and an exhaust gas analyzing device that analyses the exhaust gas sampled by the exhaust gas sampling device, the system further comprising an exhaust gas sampling part that has an exhaust gas sampling port arranged to face an exhaust gas discharging port of the exhaust gas pipe and that samples the exhaust gas emitted from the exhaust gas discharging port and an ambient gas surrounding the exhaust gas pipe, wherein
the exhaust gas sampling part has an involvement decreasing structure that decreases the exhaust gas flowing out from the exhaust gas sampling port due to involvement of the exhaust gas by the ambient gas that flows in from the exhaust gas sampling port.
